# EUROPEAN PATENT SPECIFICATION

(11) **EP 1 993 909 B1**
(45) Date of publication and mention of the grant of the patent: **25.11.2009**
(21) Application number: 07705692.7
(22) Date of filing: 13.03.2007
(51) Int. Cl.: B65B 3/02, B65B 61/18, B29C 49/00, B29C 49/20

(54) **IMPROVED THERMOFORMING PLANT FOR THE BLOW MOULDING AND HEAT-WELDING OF CONTAINERS**
VERBESSERTE THERMOFORMANLAGE FÜR DAS BLASFORMEN UND WÄRMESCHWEISSEN VON BEHÄLTERN
INSTALLATION DE THERMOFORMAGE AMÉLIORÉE POUR LE MOULAGE PAR SOUFFLAGE ET LA THERMOSOUDURE DE CONTENANTS

(30) Priority: 14.03.2006 IT BO20060179
(43) Date of publication of application: 26.11.2008
(73) Proprietor: Unifill S.r.l., 41036 Villafranca di Medolla (MO) (IT)
(72) Inventor: PARINI, Massimiliano, 44040 Alberone di Cento (Ferrara) (IT); TAGLIAFERRI, Roberto, 40024 Castel San Pietro Terme (Bologna) (IT)
(74) Representative: Provvisionato, Paolo
(86) International application number: PCT/IB2007/000613
(87) International publication number: WO 2007/105079

(56) References cited:
- WO-A-86/06344
- WO-A-95/05317
- WO-A-98/47772
- WO-A-2005/014399
- US-A- 3 323 274
- US-B1- 6 581 357
- PATENT ABSTRACTS OF JAPAN vol. 017, no. 427 (M-1459), 9 August 1993 (1993-08-09) & JP 05 092479 A (MATERIAL ENG TECH LAB INC), 16 April 1993 (1993-04-16)

## Description

This invention relates to the sector of plants for the manufacture of containers from thermoformable and heat-weldable plastics material, the containers being formed by the blowing of a fluid.

This invention is intended to have particular reference to containers incorporating a closure member. Closure members generally comprise at least one opening with an insert or a lip on which a closure cap is preferably engaged. This invention relates in particular, but not restrictively, to containers made of very thin plastics materials with a soft consistency, for example comprising multi-layer laminated plastics films having thicknesses preferably of between 100 µm and 300 µm.

The manufacture of containers obtained by the blowing of fluid in plants of the known type generally gives rise to the following problems:
- during the forming stage the edges of the material forming the opening area of the containers tends to deform, taking up irregular shapes because of the high working temperature; in this respect subsequent insertion of the container metering and filling nozzles is difficult, with the possibility that the containers will be rejected at the end of the process because they are not perfectly sealed and/or formed,
- during the container metering and filling stage, parts of the filling material may remain adhering to the inner walls in the area of the opening; because of this the subsequent stage of welding an insert within the said opening area may be imperfect in that the edges of the opening are wet and therefore difficult to weld, which may give rise to subsequent losses of the material with which the containers are filled,
- cutting of the thermoformed strip, that is the pair of edges of the material in which the containers have already been thermoformed by blowing, typically in a cutting station downstream from the container forming process, may not be accurate and may give rise to imperfect definition of the edges of the containers, especially when the material has a marked elastic behaviour and the thermoformed strip is not sufficiently stretched in the cutting station,
- conventional cutting, carried out mechanically through shearing devices, makes it necessary to keep two successive containers at a predetermined distance on the thermoformed strip so that the corresponding cutting means can be positioned; an appreciable quantity of waste and therefore reject material is generated in this way, and is therefore wasted in the manufacturing process,
- movement of the edges of the plastics material which is being thermoformed and/or a thermoformed strip may not be accurate if clamping means acting on the external surface of the edges or strip are used, or a large gripping force is required upon them, because for example of the surface slip of the thermoformable plastic material, and
- the use of clamping means to move the said edges or the said strip often results in the need to have some space between subsequent containers so as to provide a grip for the clamping means; in this case successive containers have to be made a specific distance apart, with a consequent wastage of material.

US 3 323 274 teaches to attach an insert prior to other workings stations, but at this stage the insert is not welded to the web.

In the plants known in the art additional clamping systems often have to be used at the cutting station in order to be able to stretch the thermoformed strip, in particular when this consists of a very thin material, so that the cut can be made effectively. These additional clamping systems complicate the construction and operation of the plant, apart from the need to increase the abovementioned space between the containers so that the said clamping members can gain a hold.

The object of this invention is to overcome the abovementioned disadvantages, providing an improved plant for the thermoforming of containers by blow moulding and heat-welding and a method for the manufacture of containers of thermoformable and heat-weldable plastics material comprising a closure member.

One object of the invention is to achieve the reliable, quality and economical manufacture of containers comprising plastics material which can be thermowelded and blow moulded, in particular when very thin materials are used.

Another object of the invention is to provide containers with an optimum seal at the opening and with correct alignment of an insert welded into that opening. Another object of this invention is to reduce waste in the production process and to optimise utilisation of the film of plastics material which is to be heat welded and moulded.

Another object is to improve the process of cutting the edges of the individual containers, making this faster, more accurate and more flexible. Another object is to facilitate and improve movement of the edges of the material which has to be thermoformed and/or movement of the thermoformed strip between the stations in the plant.

In order to accomplish the abovementioned objects, the invention relates to an improved plant for the blow moulding and heat-welding of containers and a method for the manufacture of containers from thermoformable and heat-weldable plastics material as mentioned in the appended claims, which form an integral part of this description.

The plant for the blow moulding and heat-welding of containers according to this invention comprises means for feeding a thermoformable and heat-weldable plastics material and a plurality of stations at which the said plastics material is processed in order to form the containers. In use the feed members unroll at least two edges of the said material in a preferred direction, and in particular towards the first of the workstations. The plurality of workstations comprises at least one station at which an insert is welded onto a container, each insert being capable of defining and forming the opening of a corresponding container, and one or more stations in which the containers are welded and/or formed.

A first aspect of the invention provides that the insert welding station precedes any other workstation for welding of the edges and/or forming of the containers. More particularly, the insert welding station is located downstream of the plant's feed means and is optionally preceded by edge preheating stations.

In an advantageous embodiment of this invention the insert welding station comprises welding means to weld at least a lower portion of an insert to the edges of the material, the said at least one lower portion being located within the two edges of the plastics material which has to be thermoformed, before the welding operation.

This arrangement makes it possible to achieve qualitatively optimum welding of the insert to each of the container openings in that the edges of the material have not yet been handled or subjected to any operation, and therefore their original chemical and physical properties have not been adversely affected in any way. Furthermore, this arrangement makes it possible to achieve correct alignment of the inserts, and offers the possibility of transporting the edges of material through the entire plant through clamping means which engage the inserts rather than the edges of the material.

In accordance with a second aspect of the invention, a method is provided for the manufacture of containers from thermoformable and heat-weldable plastics material comprising a plurality of operations of welding the edges and/or forming the containers including an operation of welding an insert into an opening inner container, and subsequently at least one operation of container metering or filling. The insert welding operation takes place during any stage preceding the container metering and filling operation. In accordance with a particularly advantageous embodiment the insert welding operation takes place before any operation of welding the edges and/or forming the containers.

The insert welding operation carried out in this way ensures an optimum qualitative result when fixing the insert in the container, in that the weld is made substantially when the edges of the opening are perfectly dry and there is therefore the maximum possibility of obtaining a long-lasting weld of optimum quality.

Also, and in accordance with the abovementioned aspects of the invention, it is possible to form and/or fill each individual container advantageously through a nozzle inserted directly into the insert, which incorporates a through hole, so as to ensure operations of the utmost efficiency and economy during the stages of forming and filling.

A not claimed aspect of the invention relates to the use of laser cutting means in a cutting station in the improved plant. According to a particularly advantageous embodiment the laser cutting means are synchronised with movement of the containers placed on a conveyor belt. The arrangement brings about accurate, quick and economic cutting of the thermoformed containers. The conveyor belt is advantageously, but not restrictively, moved continuously, unlike the intermittent movement characterising movement of the edges and the thermoformed strip in the preceding stations. The continuous movement ensures great flexibility for the plant as far as the application of known systems for the discharge of containers is concerned, as these operate best when associated with continuous advance of the cut containers in a predetermined direction.

Other advantages and characteristics of the present invention will become clear from the following detailed description which is given with reference to the appended drawings which are provided purely by way of non-limiting example and in which:
- Figure 1 is a lateral diagrammatical view of part of a container heat-welding and thermoforming plant according to the invention,
- Figure 2 is a diagrammatical lateral view of a station in the plant in Figure 1, in particular a station for preheating and welding an insert,
- Figure 3 is a diagrammatical view of the insert preheating and welding station according to the cross-section view A-A in Figures 1 or 2,
- Figure 4 is a diagrammatical lateral view relating to part of the plant according to the invention, in particular a cutting station, and
- Figure 5 is a diagrammatical view from above of the cutting station in Figure 4, which in particular shows the movement of the containers produced in the plant.

With reference now to the figures, a plant for the blow moulding and heat-welding of containers according to this invention comprises feed means 10 to feed the plant with a thermoformable and heat-weldable plastics material which is intended to be processed at subsequent workstations in the plant. These workstations may comprise for example one or more stations 11A and 11B for preheating the plastics material, an insert welding station 12, a station 13 for welding the container profiles, and a station 14 for blow moulding the containers. The plant also comprises, downstream from the aforesaid stations, a station 15 for cutting and sorting the containers. Other stations not explicitly illustrated in the drawings, such as for example stations for metering and filling containers, for inserting a plug or for carrying out other operations, depending upon the specific chemical and/or functional characteristics of the container which it is intended to produce, may be present between the aforesaid stations 11 to 14 and cutting station 15.

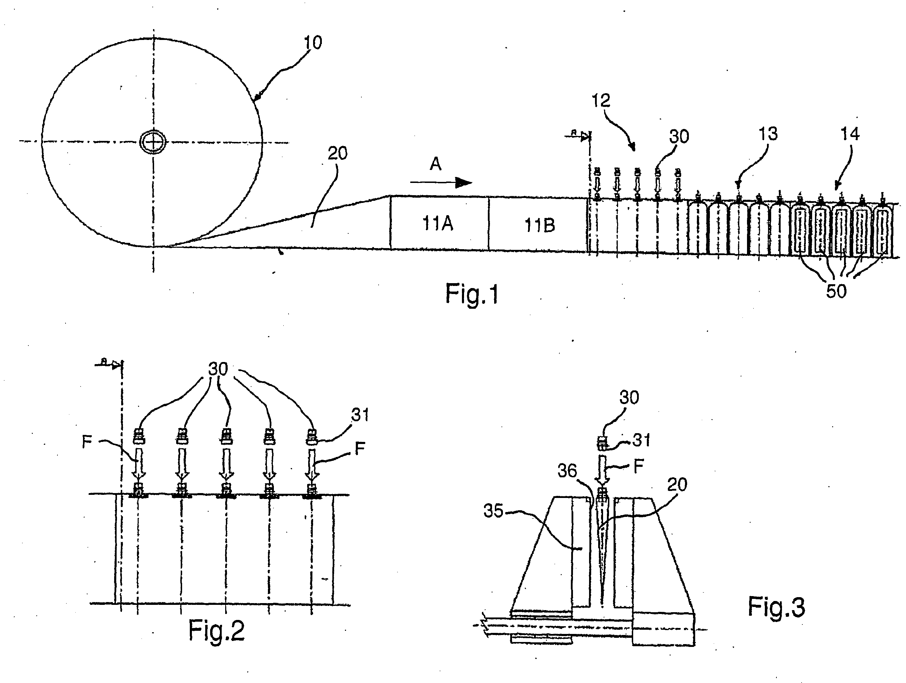

Feed means 10 feed two edges of plastics material 20, for example formed from a single film folded along its median axis as illustrated in Figure 1, or from two separate films of material placed alongside each other and originating from corresponding spools, towards the aforesaid workstations in a preferred direction A.

Figures 2 and 3 diagrammatically illustrate insert welding station 12. According to one aspect of this invention, station 12 is located upstream form all the other edge welding stations 13 and/or container forming stations 14 in the preferred direction A, and follow stations 11A and 11B in which the plastics material is preheated. Insert welding station 12 comprises a main frame to which mobile insertion means for positioning inserts 30 within an upper portion of the two edges 20 are connected. Each insert 30 is, for example, of substantially cylindrical shape and comprises a through hole. A lower portion 31 of insert 30 comprises at the top an abutting edge for the edge of plastics material which has to be heat welded. In use insert 30 is moved by the insertion means in the direction of arrow F, that is in an insertion direction substantially transverse to the direction of advance A of edges 20, in such a way that only the lower portion 31 lies effectively within the two edges 20. Advantageously the through hole in insert 30 makes it possible to house within it in a leaktight manner nozzles for carrying out the subsequent operations of blowing, forming, metering and/or filling the containers, and any other operations which require fluids to be blown within the two edges 20 of material. This permits rapid and safe performance of all the aforesaid operations in that the nozzles only interact with insert 30 and no longer directly with edges 20 as is the case in the state of the art.

Insert welding station 12 further comprises, in mobile connection with the main frame, means for welding said inserts 30 to the edges of plastics material 20. These means may for example, and without restriction, be two welding members located opposite each other and moving back and forth in a direction transverse to the said direction of advance A of the material which is to be heat welded. The welding members, for example two welding moulds 35, each comprise an inner surface which in use faces the edges of the material, and on which there is provided a heat-welding surface 36 of a known type to weld an upper portion of the two edges of material 20 to the lower extremity 31 of inserts 30, lower extremity 31 being inserted between the two edges 20.

The plant for the heat-welding and blow moulding of containers may also comprise, downstream from insert welding station 12:
- a station 13 for welding the profile of the containers,
- a station 14 for blow moulding the containers,
- further stations for container blowing and/or forming and/or metering and/or filling and/or inserting a cap on insert 30,
- buffer means to buffer a strip thermoformed in the preceding stations, and
- a station 15 for cutting and sorting the containers formed.

According to a further particularly advantageous feature of this invention, the blow moulding and heat-welding plant comprises means for checking the seal in the containers formed. For example, but not restrictively, after the container profile welding station pressure measurement means may be connected to the blowing means. The blowing means are leaktightly inserted within the inserts and a predetermined quantity of fluid is blown into the containers in such a way as to create a predetermined pressure. The pressure measurement means measure the pressure created for a predetermined period of time. If the pressure measurement means detect a decrease in the said pressure in one of the containers, this means that welding of the profiles in that container and/or the portion of film in that container are not leaktight and therefore indicate to a monitoring system that the container is defective.

According to another advantageous feature of this invention, the container blow moulding and heat-welding plant comprises means for filling the containers under vacuum conditions. For example, but not restrictively, the filling station comprises nozzles capable of drawing out the air present within the containers. Once a vacuum has been produced within the containers the filling means insert the filling material into the container in a single operation, at high speed and without the risk of air bubbles forming within the container. The vacuum creation means may also be used to check the leaktightness of the containers in the ways described above.

The leak test, and filling under vacuum conditions, can be carried out because, unlike systems of the known type, the inserts guarantee that the connection between the nozzles and the interior of the containers is airtight.

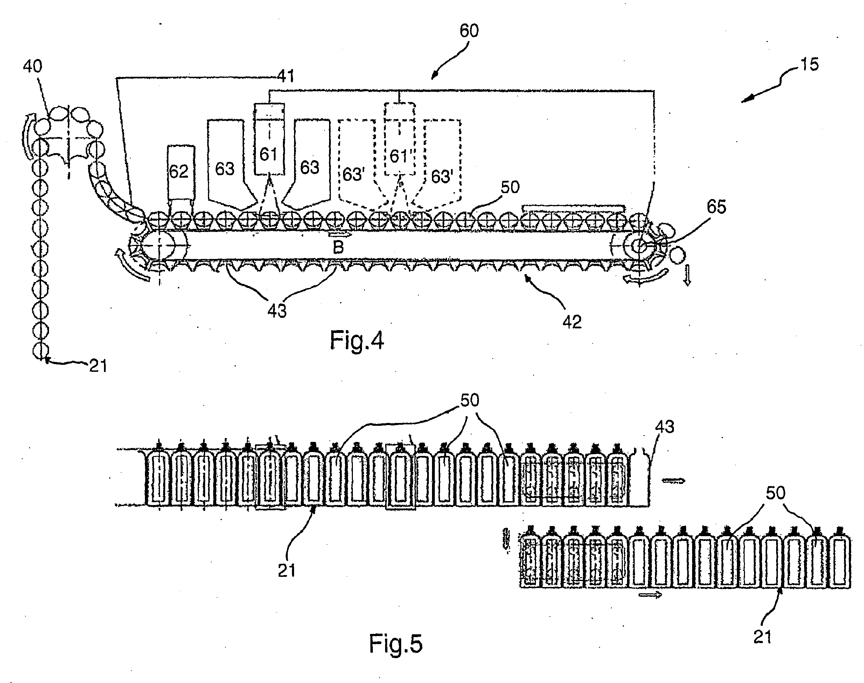

Figures 4 and 5 illustrate cutting station 15 diagrammatically. A thermoformed strip, indicated by 21 and obtained by processing the edges of the sheet of plastics material in the preceding stations is, for example, but not restrictively, guided in rotation by a wheel 40 of the buffer means towards station 15 through the help of directing means 41. The buffering means make it possible to modify the intermittent movement of edges 20 or band 21 in the preceding stations into a continuous movement at cutting station 15.

Cutting station 15 comprises means for continuously moving thermoformed strip 21,for example a conveyor belt 42 for advancing strip 21 in direction B. Conveyor belt 42 comprises centering members, for example centering and drawing templates 43 associated externally with conveyor belt 42 within which the containers made in thermoformed strip 21 are housed.

Station 15 for cutting and sorting the containers also comprises a preferably continuous laser cutting system for cutting thermoformed strip 21, indicated as a whole by 60 and the subject of improvement according to this invention. Cutting system 60 comprises members for laser cutting, for example a laser head 61 having devices for emitting and orientating at least one laser ray of predetermined power. Laser head 61 is placed above conveyor belt 42 at a predetermined distance in such a way that the laser ray emitted from it cuts strip 21 along a predetermined track corresponding to the perimeter of a plurality of previously thermoformed containers 50.

Cutting system 60 may also comprise a checking device 62 which when in use is capable of checking that containers 50 are correctly positioned within the corresponding template 43 in strip 21. Checking device 62, for example but not restrictively a remote camera or infrared system, is preferably located downstream from laser head 61 and faces strip 21.

A control and management system forming part of cutting system 60 ensures synchronisation between movement of the laser beam generated in laser head 61 and the forward movement of conveyor belt 42 (in direction B). The advancing movement of conveyor belt 42 is detected by a position and speed detection device, for example an electromechanical position transducer, an encoder 65 or a resolver connected to the control system and the cutting system. With the help of encoder 65 the control and management system controls movement of the laser beam along a predetermined cutting track established so that it is perfectly synchronised with respect to the actual position of the individual container shapes during the forward movement of conveyor belt 42.

Centering and drawing templates 43 on conveyor belt 42 are advantageously shaped in such a way as to accurately and firmly house the containers made in strip 21. This makes it possible to proceed with cutting the edges of the containers more accurately, creating a container with well-defined and finished edges.

Means for the extraction of fumes and generically the waste generated in the cutting operation, for example extraction means 63, are associated with the laser cutting members and in particular with laser head 61 on both sides (left and right in Figure 4) with respect to laser head 61. Extraction means 63 are thus associated with the area in which thermoformed strip 21 is cut in such a way as to advantageously bring about the removal of fumes and trimmings and more generally the wastes which are produced in the area adjacent to the cut in each laser container perimeter cutting operation.

Cutting system 60 may comprise additional members for laser cutting indicated by dashed lines in Figure 4, for example a second laser head 61' of similar construction to head 61 and likewise equipped with such means 63' positioned in a similar way to what has been described above and for the same purposes.

The choice of the nature and power of the laser which is to be used for cutting, and the provision of one or more laser heads at station 15, will be made in the light of the following parameters: thickness and nature of the material of the tape which is to be cut, length of the cut depending upon the shape and dimensions of the individual containers which have to be produced, speed of advance of the thermoformed strip.

Close to a terminal part of conveyor belt 42, on the right in Figure 4, there is a position 16 for selecting previously cut containers 50, where selection means and removal means interact with containers 50 taking them from template 43. Conversely, containers which are found to be non-conforming are not taken by the selection means, remain on the belt and are discharged by dropping off when they reach the (righthand) extremity of conveyor belt 42.

It should be noted that the continuous movement of conveyor belt 42 in a specific direction B and the fact that containers 50 lie substantially horizontal makes it simple and efficient to use any known selection system. In fact the selection system is assisted in its operation by the presence of a detection device 65 which detects the precise position of each template, thus communicating the precise position of each container to the selection system. Advantageously the containers which are to be sampled are located substantially horizontally for easy operation of the selection means, for example from above or laterally.

In use feed means 10 feed two edges of plastics material 20 in preferred direction A, preferably intermittently in such a way as to permit edges 20 to be processed at subsequent workstations. In particular edges 20 are subjected to preheating operations at stations 11A and 11B. In insert welding station 12 the inserting means position insert 30 within edges 20 acting in direction F, in particular positioning lower portion 31 between the upper parts of edges 20 until the extremities of edges 20 bear against the stop shoulder of insert 30. Then, heat welding surfaces 36 approach edges 20, the moulds which are heated for the purpose are closed together and press edges 20 onto lower portion 31 of insert 30 in order to weld them together.

After being welded as above, edges 20 are advanced to subsequent workstations, for example through clamping means which seize one or more inserts 30. Edges 20 pass for example to station 13 where the container profiles are welded in a known way. Once completely welded and incorporating insert 30 welded to them, edges 20 are then advanced to subsequent stations, for example station 14 for forming containers 50. The station forms containers 50 by blowing a flow of air into the container through one or more inserts 30 through forming nozzles which, when in operation, are leaktightly inserted within each insert 30.

Processing continues in a known way through successive stations, for example a container metering or filling station, a container leak-testing station, and eventually a station for fitting caps onto inserts 30.

At the end of the container-processing process buffer means transform the intermittent motion of the edges and the strip processed hitherto into a continuous movement of thermoformed strip 21 towards cutting station 15. Motor-driven wheel 40, which is subject to the buffering means, draws thermoformed tape 21 from an accumulation hopper and delivers it to templates 43 of conveyor belt 42 through the intermediate agency of directing means 41.

Laser cutting is performed on conveyor belt 42 through cutting system 60 described, which carries out the operations of:
a) synchronising and aligning the laser beam originating from laser head 61, and if appropriate second laser head 61', with the movement of conveyor belt 42 in accordance with a programme for cutting the container edges,
b) cutting the container edges, and
c) removing the fumes and waste from the cutting operation.

Cutting takes place through controlled movement of the laser beam along the perimeters of the containers, having regard to the advancing movement of conveyor belt 42 in direction B. For example, while conveyor belt 42 advances, the laser beam may follow the perimeter of an individual container 50 which has to be cut and then moved to the next container, thus effecting continuous cutting of the containers.

The programme for operation of the laser cutter will be selected, for example but not restrictively, on the basis of the following characteristics: type and power of the laser used, the presence of one or more laser heads, thickness and nature of the material of the strip which is to be cut, length of cut depending on the shape and dimensions of the individual containers which have to be produced, and rate of advance of thermoformed strip 21. In this way a cut of optimum quality is achieved, at the same time saving on the power used and thus ensuring maximum efficiency for the plant.

Templates 43, which are of one piece with conveyor belt 42, thus carry individual containers 50 cut at position 16, where the containers considered to be suitable are selected. For example the decision whether a container is selected or rejected takes place on the basis of predetermined production tolerances specified for the plant.

According to one aspect of this invention the operation of welding an insert into the opening of a container takes place at any stage preceding that of container metering or filling. This ensures an optimum qualitative result when the insert is fixed into the container, in that the weld is made when the edges of the opening are perfectly dry.

The use of laser cutting systems synchronised with the continuous movement of the thermoformed strip ensures that the containers can be made close to each other in the thermoformed strip of plastics material because the lasers are capable of precisely following the perimeters of the containers and making a very accurate cut.

The improvement in the plant which provides for making inserts welded to the edges of the plastics material at the start of the process for making containers advantageously makes it possible to implement movement of the film of plastics material through clamping means which are capable of seizing one or more inserts, not shown in the appended figures for the purpose of simplicity. In this way the positioning of clamping means directly onto the film which has to be thermoformed or onto the thermoformed strip in the areas between one container and the next is avoided, and it is therefore possible to reduce the distance between two consecutive containers on the film which has to be thermoformed, with consequent reduction of production waste and a saving in plastics material. In addition to this the clamping means advantageously achieve a better hold on the surface when operating on the upper surface of the insert, as this is generally rough, unlike known clamps which act on a substantially smooth surface typical of films of plastics material requiring thermoforming.

According to a particularly advantageous feature of this invention, when in use insert welding station 12 brings about both welding of inserts 30 to the edges of plastics material 20 and welding of the container perimeter. Thus the critical area of the opening of the containers which has to be thermoformed can be defined precisely and accurately, and the welded inserts which define the final shape of the opening of the container produced can be inserted conveniently, quickly and in a geometrically defined way, at the same time reducing the overall dimensions of the plant, avoiding the material being subjected to subsequent stages of heating and cooling which can deteriorate its chemical and physical properties. These inserts may advantageously constitute the part onto which the container caps are screwed as well as the openings into which the forming nozzles are inserted at successive forming stations.

The abovementioned advantages are more obvious when containers comprising plastics material of a very soft consistency are used, for example consisting of multi-layer laminate plastics films having thicknesses typically between 100 µm and 300 µm. These materials are particularly difficult to handle, shape and cut in an accurate way, and need to be well stretched at the cutting station when they are cut by conventional mechanical means. Also, in the case of these containers it is particularly advantageous to transport them through clamping means acting on a welded insert, because of their soft consistency which typically escapes the clamping means acting on the edges or the strip of thermoformed material.

According to another of the preferred embodiments of this invention the container blow moulding and heat-welding plant comprises feed means for feeding the plant with thermoformable and heat-weldable plastics material which is intended to be processed at subsequent workstations. The workstations may for example comprise one or more stations in which the plastics material is preheated, an insert welding station, a container profile welding station, a container blow moulding station. Downstream from the aforesaid stations the plant does not comprise a filling station, but only a station for cutting and sorting the empty containers.

The edges of plastics material are fed in the preferred direction A to the various stations so that the container profiles can be welded, the containers can be formed by blowing in a fluid, the insert can be welded to define the opening of the container, together with any other operations described above. The sequence of all these operations can be modified on the basis of predetermined parameters such as for example the type and shape of the container, the type of the thermoformable material and/or predetermined choices by the manufacturer. Once the containers have been formed and the inserts have been welded to define the container opening, the containers are sent directly to the cutting station. Once cut the containers are sent individually or in groups to other workstations, preferably external to and separate from the plant such as, for example, a container metering or filling station, and/or a station for leak testing the containers, and/or a station for fitting caps to the inserts.

Naturally, the principle of the invention remaining the same, the forms of embodiment and details of construction may be varied widely with respect to those described and illustrated, which have been given purely by way of example, without thereby departing from the scope of the invention.

## Claims

1. A plant for the heat-welding and blow moulding of containers comprising feed means (10) for feeding a thermoformable and heat-weldable plastics material in a preferred direction (A), a plurality of stations (11, 12, 13, 14, 15) for processing the said plastics material to form the containers (50) when in use and arranged in succession along the preferred direction (A), the plurality of stations comprising a station (12) at which an insert is welded onto a container (50), each insert (30) defining the opening of a corresponding container (50), **characterised in that** the said insert welding station (12) is located downstream from the said feed means (10) and upstream from one or more of the workstations for welding of the edges and/or.forming of the containers (13, 14) in the preferred direction (A) of advance of the material.

2. A plant according to Claim 1, **characterised in that** it also comprises one or more filling stations to fill the containers (50) with filling material when in use, the insert welding station (12) being located upstream from the said one or more filling stations in the preferred direction (A).

3. A plant according to any one of the preceding claims, **characterised in that** the said plastics material comprises at least two edges (20), the said insert welding station (12) comprising welding means for welding at least one lower portion (31) of an insert (30) to the edges (20) of the material, the said at least one lower portion (31) being placed between the edges (20) of the material before the welding operation.

4. A plant according to Claim 3, **characterised in that** the said insert (30) comprises a through hole for leaktightly housing nozzles within it for performing subsequent operations at one or more of the workstations (13, 14, 15).

5. A plant according to Claim 1, **characterised in that** it also comprises clamping means capable of seizing one or more inserts (30) in order to move the said edges (20) of plastics material in the preferred direction (A).

6. A plant according to Claim 1, **characterised in that** it also comprises a cutting station (15) to cut the containers (50), the said cutting station (15) comprising at least one laser cutting system (60).

7. A plant according to Claim 6, **characterised in that** the said cutting system comprises laser cutting members (61) and devices for emitting and orientating at least one laser beam.

8. A plant according to Claim 7, **characterised in that** it also comprises means (42) for moving the containers (50), a device (65) for detecting the precise position of the containers (50) and a control and management system associated with the said detection device (65) in such a way that when in use the orientation of the laser beam is synchronised with respect to the actual position of each container (50) following the advancing movement of the said movement means (42).

9. A plant according to Claim 6, **characterised in that** it comprises buffering means for the containers (50) in order when in use to change an intermittent advancing movement of the edges (20) in a preferred direction (A) into a continuous movement.

10. A plant according to Claim 9, **characterised in that** the said buffer means are located upstream of the cutting station (15).

11. A plant according to Claim 10, **characterised in that** the means for moving thermoformed containers comprise a conveyor belt (42) comprising centring and drawing members (43) for precisely and perfectly housing the containers (50).

12. A plant according to Claim 6, **characterised in that** the said laser cutting system (60) comprises means for the extraction of fumes and waste (63) associated with the said elements as a result of the laser cutting (61).

13. A plant according to Claim 6, **characterised in that** the said cutting station (15) comprises a station for selection of the containers (16) and means for selecting and taking up the containers (50), the said containers (50) lying in a substantially horizontal position on the said moving means (42).

14. A method for the manufacture of containers from blow mouldable and heat-weldable plastics material in a plant of the type comprising a plurality of stations for processing the plastics material, comprising the stages of welding the plastics material, forming the containers (50), welding an insert (30), defining an opening in a container (50), and a stage of metering and filling the containers (50), **characterised in that** the said stage of welding an insert (30) takes place prior to any stage of welding the material and/or forming the containers (50).

15. A method according to Claim 14, **characterised in that** the said insert welding stage comprises the insertion of at least one blower portion (31) of an insert (30) between a pair of edges (20) of the said material along a direction (F) transverse to the direction of advance (A) of the edges (20).

16. A method according to Claim 14, **characterised in that** it comprises a further stage of laser cutting of the containers (50).

17. A method according to Claim 16, **characterised in that** it comprises a stage of converting the movement of the containers from an intermittent movement to a continuous movement, the change occurring in particular after an operation of metering and filling the containers (50).

18. A method according to Claim 17, **characterised in that** the laser cutting operation takes place in a manner which is synchronised with the continuous movement of the containers, the laser beam following the perimeters of the containers (50) which have to be cut.

19. A method according to Claim 16, **characterised in that** it also comprises a stage of extracting the fumes and wastes from the cutting stage.

20. A method according to Claim 16, **characterised in that** it comprises the operation of selecting and rejecting containers, the containers (50) being moved continuously and positioned in a substantially horizontal position.

## Patentansprüche

1. Anlage zum Wärmeschweißen und Blasformen von Behältern, mit Zufuhrmitteln (10) zum Zuführen eines wärmeformbaren und wärmeschweißbaren Kunststoffs in einer bevorzugten Richtung (A), und mehreren Stationen (11, 12, 13, 14, 15) zum Verarbeiten des Kunststoffs, um im Gebrauch die Behälter (50) zu bilden, die längs der bevorzugten Richtung (A) nacheinander angeordnet sind, wobei die mehreren Stationen eine Station (12) enthalten, an der ein Einsatz an den Behälter (50) geschweißt wird, wobei jeder Einsatz (30) die Öffnung eines entsprechenden Behälters (50) definiert, **dadurch gekennzeichnet, dass** sich die Einsatzschweißstation (12) in der bevorzugten Richtung (A) des Materialvorschubs hinter den Zufuhrmitteln (10) und vor der einen oder den mehreren Arbeitsstationen zum Schweißen der Kanten und/oder zum Bilden der Behälter (13, 14) befindet.

2. Anlage nach Anspruch 1, **dadurch gekennzeichnet, dass** sie außerdem eine oder mehrere Füllstationen enthält, um im Gebrauch die Behälter (50) mit Füllmaterial zu füllen, wobei sich die Einsatzschweißstation (12) in der bevorzugten Richtung (A) vor der einen oder den mehreren Füllstationen befindet.

3. Anlage nach einem der vorhergehenden Ansprüche, **dadurch gekennzeichnet, dass** der Kunststoff wenigstens zwei Kanten (20) aufweist, wobei die Einsatzschweißstation (12) Schweißmittel enthält, um wenigstens einen unteren Abschnitt (31) eines Einsatzes (30) an die Kanten (20) des Materials zu schweißen, wobei der wenigstens eine untere Abschnitt (31) zwischen den Kanten (20) des Materials vor des Schweißoperation angeordnet wird.

4. Anlage nach Anspruch 3, **dadurch gekennzeichnet, dass** der Einsatz (30) ein Durchgangsloch aufweist, um in ihm Blasdüsen leckdicht unterzubringen, um nachfolgende Operationen an einer oder mehreren der Arbeitsstationen (13, 14, 15) auszuführen.

5. Anlage nach Anspruch 1, **dadurch gekennzeichnet, dass** sie außerdem Klemmmittel enthält, um einen oder mehrere Einsätze (30) ergreifen zu können, um die Kanten (20) aus Kunststoff in der bevorzugten Richtung (A) zu bewegen.

6. Anlage nach Anspruch 1, **dadurch gekennzeichnet, dass** sie außerdem eine Schneidstation (15) enthält, um die Behälter (50) zu schneiden, wobei die Schneidstation (15) wenigstens ein Laserschneidsystem (60) enthält.

7. Anlage nach Anspruch 6, **dadurch gekennzeichnet, dass** das Schneidsystem Laserschneidelemente (61) und Vorrichtungen zum Emittieren und Ausrichten wenigstens eines Laserstrahls enthält.

8. Anlage nach Anspruch 7, **dadurch gekennzeichnet, dass** sie außerdem Mittel (42), um die Behälter (50) zu bewegen, eine Vorrichtung (65), um die präzise Position der Behälter (50) zu detektieren, und ein Steuerungs- und Managementsystem, das der Detektionsvorrichtung (65) in der Weise zugeordnet ist, dass diese dann, wenn im Gebrauch die Ausrichtung des Laserstrahls mit der Ist-Position jedes Behälters (50) synchronisiert ist, der Vorwärtsbewegung der Bewegungsmittel (42) folgt, enthält.

9. Anlage nach Anspruch 6, **dadurch gekenntzeichnet, dass** sie Pufferungsmittel für die Behälter (50) enthält, um im Gebrauch eine intermittierende Vorwärtsbewegung der Kanten (20) in einer bevorzugten Richtung (A) in eine ununterbrochene Bewegung zu ändern.

10. Anlage nach Anspruch 9, **dadurch gekennzeichnet, dass** sich die Pufferungsmittel vor der Schneidstation (15) befinden.

11. Anlage nach Anspruch 10, **dadurch gekennzeichnet, dass** die Mittel zum Bewegen von thermogeformten Behältern ein Förderband (42) enthalten, das Zentrierungs- und Zugelemente (43) enthält, um die Behälter (50) präzise und fehlerfrei aufzunehmen.

12. Anlage nach Anspruch 6, **dadurch gekennzeichnet, dass** das Laserschneidsystem (60) Mittel zum Abführen von Rauchgasen und Abfall (63), die bei den Elementen als Folge des Laserschneiden (61) entstehen, enthält.

13. Anlage nach Anspruch 6, **dadurch gekennzeichnet, dass** die Schneidstation (15) eine Station zum Auswählen der Behälter (16) und Mittel zum Auswählen und Aufnehmen der Behälter (50) enthält, wobei die Behälter (50) in einer im Wesentlichen horizontalen Stellung auf den Bewegungsmitteln (42) liegen.

14. Verfahren für die Herstellung von Behältern aus blasformbarem und wärmeschweißbarem Kunststoff in einer Anlage des Typs, der mehrere Stationen zum Verarbeiten des Kunststoffs enthält, enthaltend die Schritte des Schweißens des Kunststoffs, des Bildes der Behälter (50), des Anschweißens eines Einsatzes (30), des Definierens einer Öffnung in einem Behälter (50) und einen Schritt des Dosierens und Befüllens der Behälter (50), **dadurch gekennzeichnet, dass** der Schritt des Anschweißens eines Einsatzes (30) vor jedem anderen Schritt des Schweißens des Materials und/oder des Bildens der Behälter (50) erfolgt.

15. Verfahren nach Anspruch 14, **dadurch gekennzeichnet, dass** der Binsatzschweißschritt das Einsetzen wenigstens eines Blasabschnitts (31) eines Einsatzes (30) zwischen ein Paar Kanten (20) des Materials in einer Richtung (F) quer zur Vorschubrichtung (A) der Kanten (20) enthält.

16. Verfahren nach Anspruch 14, **dadurch gekennzeichnet, dass** es einen weiteren Schritt des Laserschneidens der Behälter (50) enthält.

17. Verfahren nach Anspruch 16, **dadurch gekennzeichnet, dass** es einen Schritt des Umwandelns der Bewegung der Behälter von einer intermittierenden Bewegung in eine ununterbrochene Bewegung enthält, wobei die Änderung insbesondere nach einem Vorgang des Dosierens und Befüllens der Behälter (50) erfolgt.

18. Verfahren nach Anspruch 17, **dadurch gekennzeichnet, dass** der Laserschneidvorgang in einer Weise erfolg, die mit der ununterbrochenen Bewegung der Behälter synchronisiert ist, wobei der Laserstrahl den Umfängen der zu schneidenden Behälter (50) folgt.

19. Verfahren nach Anspruch 16, **dadurch gekennzeichnet, dass** es außerdem einen Schritt des Abführens der Rauchgase und Abfälle aus dem Schneidschritt enthält.

20. Verfahren nach Anspruch 16, **dadurch gekennzeichnet, dass** es den Vorrang des Auswählens und Zurückweisens von Behältern enthält, wobei die Behälter (50) ununterbrochen bewegt und in einer im Wesentlichen horizontalen Stellung positioniert werden.

## Revendications

1. Installation pour la thermo-soudure et le moulage par soufflage de conteneurs comprenant des moyens d'alimentation (10) pour alimenter du matériau plastique thermoformable et thermo-soudable dans une direction préférée (A), une pluralité de postes (11, 12, 13, 14, 15) pour traiter ledit matériau plastique pour former les conteneurs (50) lors de l'utilisation et agencés en succession le long de la direction préférée (A), la pluralité de postes comprenant un poste (12) au niveau duquel un insert est soudé sur un conteneur (50), chaque insert (30) définissant l'ouverture d'un conteneur correspondant (50), **caractérisée en ce que** ledit poste de soudure d'insert (12) est localisé en aval desdits moyens d'alimentation (10) et en amont d'une ou de plusieurs des postes de travail pour le soudage des bords et/ou la formation des conteneurs (13, 14) dans la direction préférée (A) de l'avancée du matériau.

2. Installation selon la revendication 1, **caractérisée en ce qu'**elle comprend également un ou plusieurs postes de remplissage pour remplir les conteneurs (50) avec un matériau de remplissage lors de l'utilisation, le poste de soudure d'insert (12) étant localisé en amont dudit ou desdits postes de remplissage dans la direction préférée (A).

3. Installation selon l'une quelconque des revendications précédentes, **caractérisée en ce que** ledit matériau plastique comprend au moins deux bords (20), ledit poste de soudure d'insert (12) comprenant des moyens de soudure pour souder au moins une portion inférieure (31) d'un insert (30) au bords (20) du matériau, ladite au moins une portion inférieure (31) étant placée entre les bords (20) du matériau avant l'opération de soudure.

4. Installation selon la revendication 3, **caractérisée en ce que** ledit insert (30) comprend un trou traversant pour y accueillir de manière étanche des buses pour accomplir des opérations ultérieures à un ou plusieurs postes de travail (13, 14, 15).

5. Installation selon la revendication 1, **caractérisée en ce qu'**elle comprend également des moyens de serrage capables de saisir un ou plusieurs inserts (30) afin de déplacer lesdits bords (20) du matériau plastique dans la direction préférée (A).

6. Installation selon la revendication 1, **caractérisée en ce qu'**elle comprend également un poste de découpe (15) pour couper les conteneurs (50), ledit poste de découpe (15) comprenant au moins un système de découpe au laser (60).

7. Installation selon la revendication 6, **caractérisée en ce que** ledit système de découpe comprend des membres de découpe au laser (61) et des dispositifs pour émettre et orienter au moins un rayon laser.

8. Installation selon la revendication 7, **caractérisée en ce qu'**elle comprend également des moyens (42) pour déplacer les conteneurs (50), un dispositif (65) pour détecter la position précise des conteneurs (50) et un système de contrôle et de gestion associé avec audit dispositif de détection (65) de manière à ce que, lors de l'utilisation, l'orientation du rayon laser soit synchronisée par rapport à la position effective de chaque conteneur (50) en suivant le déplacement en avant desdits moyens de déplacement (42).

9. Installation selon la revendication 6, **caractérisée en ce qu'**elle comprend des moyens de régulation pour les conteneurs (50) afin de changer, lors de l'utilisation, un déplacement en avant intermittent des bords (20) dans une direction préférée (A) en un déplacement continu.

10. Installation selon la revendication 9, **caractérisée en ce que** lesdits moyens d'amortissement sont localisés en amont du poste de découpe (15).

11. Installation selon la revendication 10, **caractérisée en ce que** les moyens pour déplacer des conteneurs thermo-formés comprennent un tapis roulant (42) comprenant des membres de centrage et d'étirage (43) pour accueillir avec précision et parfaitement les conteneurs (50).

12. Installation selon la revendication 6, **caractérisée en ce que** ledit système de découpe au laser (60) comprend des moyens pour l'extraction des fumées et des déchets (63) associés audits éléments résultant de la découpe au laser (61).

13. Installation selon la revendication 6, **caractérisée en ce que** ledit poste de découpe (15) comprend un poste pour la sélection des conteneurs (16) et des moyens pour sélectionner et prendre les conteneurs (50), lesdits conteneurs (50) se trouvant dans une position substantiellement horizontale sur lesdits moyens de déplacement (42).

14. Méthode pour la fabrication de conteneurs à partir de matériau plastique moulable par soufflage et thermo-soudable dans une installation du type comprenant une pluralité de postes pour traiter le matériau plastique, comprenant les étapes de soudure du matériau plastique, de formation des conteneurs (50), de soudure d'un insert (30), de définition d'une ouverture dans un conteneur (50), et une étape de dosage et de remplissage des conteneurs (50), **caractérisée en ce que** ladite étape de soudure d'un insert (30) se déroule avant toute étape de soudure du matériau et/ou formation des conteneurs (50).

15. Méthode selon la revendication 14, **caractérisée en ce que** ladite étape de soudure d'insert comprend l'insertion d'au moins une portion inférieure (31) d'un insert (30) entre une paire de bords (20) dudit matériau le long d'un direction (F) transversale à la direction d'avancée (A) des bords (20).

16. Méthode selon la revendication 14, **caractérisée en ce qu'**elle comprend une étape supplémentaire de découpe au laser des conteneurs (50).

17. Méthode selon la revendication 16, **caractérisée en ce qu'**elle comprend une étape de conversion du déplacement des conteneurs d'un déplacement intermittent à un déplacement continu, le changement s'effectuant en particulier après une opération de dosage et de remplissage des conteneurs (50).

18. Méthode selon la revendication 17, **caractérisée en ce que** l'opération de découpe au laser se déroule d'une manière qui est synchronisée avec le déplacement continu des conteneurs, le rayon laser suivant les périmètres des conteneurs (50) qui doivent. être coupés.

19. Méthode selon la revendication 16, **caractérisée en ce qu'**elle comprend également une étape d'extraction des fumées et des déchets de l'étape de découpe.

20. Méthode selon la revendication 16, **caractérisée en ce qu'**elle comprend l'opération de sélection et de rejet de conteneurs, les conteneurs (50) étant déplacés de manière continue et positionnés dans une position substantiellement horizontale.
